# FASCICULE DE BREVET EUROPEEN

(11) **EP 4 169 770 B1**
(45) Date de publication et mention de la délivrance du brevet: **05.06.2024**
(21) Numéro de dépôt: 22201476.3
(22) Date de dépôt: 13.10.2022
(51) Int. Cl.: B60P 3/00, A47B 96/02, B60P 7/08

(54) **ÉTAGÈRE D'UN COMPARTIMENT DE TRANSPORT DE MARCHANDISES**
REGAL EINES WARENTRANSPORTFACHS
SHELF OF A GOODS TRANSPORT COMPARTMENT

(30) Priorité: 20.10.2021 FR 2111145
(43) Date de publication de la demande: 26.04.2023
(73) Titulaire: Pommier, 95250 Beauchamp (FR)
(72) Inventeur: CAUBEL, Laurent, 95270 LUZARCHES (FR)
(74) Mandataire: Berger, Helmut

(56) Documents cités:
- EP-A1- 3 750 444
- US-A- 3 233 852
- US-A1- 2001 035 114
- US-A1- 2019 053 642
- US-A1- 2021 009 041

## Description

L'invention a trait aux aménagements de véhicules terrestres, et plus particulièrement aux étagères pour marchandises transportées par ces véhicules. Les documents US 2001/035114 A1, EP 3 750 444 A1 et US 2021/009041 A1 décrivent de telles étagères.

Les fourgons sont un exemple de véhicules terrestres équipés de compartiment qui permet le transport de marchandises plus ou moins volumineuses.

Lors du transport des marchandises, leur mouvement est de préférence bloqué par rapport au compartiment de sorte à limiter leur détérioration et à limiter les transferts de masse lors des accélérations, freinages et/ou virages du véhicule.

Les marchandises peuvent être rangées dans le compartiment grâce à des étagères qui facilitent l'accès aux marchandises et qui permettent aux marchandises positionnée en bas de ne pas être écrasées par les marchandises positionnées au-dessus.

Ces étagères sont généralement fixées à une cloison verticale du compartiment.

Des étagères de compartiment connues comportent au moins deux bras disposés en porte-à-faux, sensiblement perpendiculairement à ladite cloison ou formant un angle aigu vers le haut avec ladite cloison.

Ces étagères comportent également des profilés posés sur un pan des bras, de préférence sensiblement perpendiculairement à une direction d'élongation des bras, et solidaires de ces derniers. La marchandise transportée peut ainsi être posée sur les profilés.

Les étagères comprennent généralement des bordures surélevées disposées en périphérie de l'ensemble des profilés. Ces bordures surélevées limitent le risque de mouvement voire de chute des marchandises posées sur de telles étagères et limitent donc le risque de détérioration des marchandises.

Les profilés sont disposés sur le bras en prévoyant un espace entre chacun d'eux.

Afin d'uniformiser l'espace entre les profilés et afin de faciliter l'assemblage des étagères, il est connu de disposer une pièce intercalaire entre deux profilés au niveau de chaque bras.

Les pièces intercalaires sont positionnées sur les bras par le dessus.

Chaque pièce intercalaire est fixée audit pan d'un des bras par un moyen d'immobilisation comme, par exemple, un rivet. Les pièces intercalaires comprennent des flancs de positionnement configurés pour venir au contact de bords dudit pan afin de positionner correctement les pièces intercalaires par rapport au pan. Les pièces intercalaires comprennent également un perçage permettant à un opérateur de percer le bras à un endroit prédéfini pour y insérer le rivet.

Les profilés comprennent des ailes latérales s'étendant de part et d'autre des profilés vers les profilés voisins. Les pièces intercalaires sont configurées pour que les ailes latérales des profilés soient positionnées entre les pièces intercalaires et les bras afin de plaquer et maintenir les profilés contre les bras.

L'assemblage de telles étagères comprend une fixation des bras à une cloison verticale d'un compartiment de transport de marchandises.

L'assemblage comprend également un positionnement approximatif des profilés sur les bras. L'assemblage comprend ensuite un positionnement des pièces intercalaires entre les profilés et un positionnement définitif des profilés contre les pièces intercalaires.

L'assemblage comprend, après le positionnement définitif des profilés, un perçage de chaque bras au niveau de chaque pièce intercalaire puis un rivetage de chaque pièce intercalaire aux bras.

Par ailleurs, le nombre de bras et de profilés et la longueur des profilés de ces étagères sont personnalisables en fonction des contraintes de l'utilisateur final et des dimensions du compartiment. Ainsi, ces étagères doivent être assemblées directement dans le compartiment ou proche de celui-ci et il s'avère très compliqué de prévoir un préassemblage automatique tant les configurations finales des étagères sont variées.

L'assemblage de telles étagères est donc un travail répétitif, long et non automatisable.

L'objectif de l'invention est de proposer une étagère pour compartiment de transport de marchandises permettant un assemblage rapide de l'étagère quelle que soit la configuration finale de l'étagère requise par les contraintes de l'utilisateur final et du compartiment.

A cet effet, il est proposé, en premier lieu, une étagère d'un compartiment de transport de marchandises, l'étagère comprenant au moins deux bras, chaque bras comprenant un moyen de fixation du bras sensiblement horizontalement et en porte-à-faux à une cloison du compartiment, l'étagère comprenant, soutenus par les bras, des profilés formant une surface de support des marchandises, l'étagère comprenant pour chaque bras des pièces intercalaires de maintien des profilés au bras, les profilés étant disposés entre les pièces intercalaires et comprenant des ailes latérales plaquées et maintenues contre le bras par les pièces intercalaires.

Une telle étagère permet le soutien et le rangement de marchandises dans un compartiment de transport de marchandises.

Les profilés sont espacés les uns des autres par le biais des pièces intercalaires. Ainsi, l'espacement entre les profilés est réglé par les pièces intercalaires ce qui rend facile et rapide le positionnement des profilés par un opérateur.

Les ailes des profilés se trouvant entre les pièces intercalaires et le bras permettent un maintien des profilés contre le bras sans avoir besoin de fixer directement les profilés au bras.

Les pièces intercalaires sont positionnées par rapport au bras au moins grâce aux profilés. L'opérateur peut ainsi positionner facilement et rapidement ces pièces par rapport au bras. Ainsi, un opérateur peut fixer de façon sûre les pièces intercalaires au bras. La fixation est par exemple faite par perçage de ces pièces et du bras puis par rivetage mais l'invention permet d'obtenir une fixation particulièrement simple.

De plus, selon l'invention, des pièces intercalaires disposées pour un même bras sont intégrées à une glissière présentant une forme complémentaire à un guide dudit bras

La glissière permet de maintenir les pièces intercalaires au bras. La fixation d'une seule pièce intercalaire par bras permet ainsi de bloquer le glissement de la glissière sur les guides.

La ou les glissières disposées sur le guide d'un bras étant rattachées à toutes les pièces intercalaires reposant sur le bras, les pièces intercalaires sont donc également bloquées.

Diverses caractéristiques supplémentaires peuvent être prévues, seules ou en combinaison :
- la glissière comprend des flancs s'étendant de chaque côté du bras et comprend deux décrochés s'étendant l'un vers l'autre à partir des flancs et le bras comprend un passage d'engagement longitudinal des décrochés dans des creux du bras disposés sur la partie inférieure du bras ; les décrochés en coopération avec les creux maintiennent les pièces intercalaires contre les bras en ne laissant sensiblement qu'un mouvement de translation entre les pièces intercalaires et les bras ;
- une des pièces intercalaires est rivetée au bras ; le rivetage permet de bloquer les translation de toutes les pièces intercalaires disposées sur ledit bras ;
- la glissière solidaire desdites pièces intercalaires disposées pour un même bras comprend une partie affaiblie de découpe de la glissière afin d'ajuster facilement et rapidement la longueur de la glissière et le nombre de pièces intercalaires solidaire de la glissière pour s'adapter au nombre de profilés et/ou à la longueur du bras ;
- la glissière est solidaire de six pièces intercalaires et, en une première extrémité de la glissière disposée du côté du moyen de fixation des bras, d'une demi-pièce intercalaire ;
- la glissière comprend deux parties affaiblies l'une disposée entre les deux premières pièces intercalaires et l'autre disposée entre la deuxième et la troisième pièces intercalaires à partir d'une deuxième extrémité de la glissière opposée à la première extrémité ;
- au moins une des pièces intercalaires est distante du guide afin de réduire les frottements lors du glissement des pièces intercalaires sur les bras ;
- au moins une des pièces intercalaires comprend un plot d'appui au contact du bras ; le plot d'appui permet ainsi de limiter la déformation de la pièce intermédiaire lors de la fixation de cette pièce intermédiaire au bras par exemple par rivetage ;
- au moins une des pièces intercalaires comprend une cavité d'alignement pour un perçage, sur son côté opposé au guide afin de faciliter et rendre plus rapide le travail de l'opérateur assemblant l'étagère ainsi que de limiter le risque d'un perçage du bras trop proche d'un bord du bras ;
- les bras sont en matériau métallique et/ou les pièces intercalaires sont en résine ou en matériau plastique ;
- elle comprend, au niveau d'une deuxième extrémité de la glissière disposée à l'opposé du moyen de fixation des bras, un profilé comprenant un bord orienté vers le haut pour la protection contre les chutes de marchandises disposées sur l'étagère, ce profilé étant riveté directement sur au moins deux des bras.

Il est proposé, en second lieu, un procédé de montage d'une étagère de compartiment de transport de marchandises, le procédé comprenant une solidarisation d'au moins deux bras à une cloison du compartiment, les bras s'étendant sensiblement horizontalement et en porte-à-faux à la cloison, le procédé comprenant un positionnement de profilés de l'étagère soutenus par les bras, un positionnement de pièces intercalaires de l'étagère entre les profilés, le procédé comprenant également un plaquage d'ailes latérales des profilés contre le bras par les pièces intercalaires, des pièces intercalaires disposées pour un même bras étant intégrées à une glissière présentant une forme complémentaire à un guide dudit bras, le procédé comprend un glissement de la glissière sur le guide.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
[Fig. 1] - la figure 1 est une vue schématique en perspective d'un fourgon comprenant une étagère selon un mode de réalisation de l'invention, l'étagère étant fixée à une cloison verticale du fourgon ;
[Fig. 2] - La figure 2 est une vue schématique de côté d'une réglette d'assemblage et de maintien de profilés de l'étagère représentée sur la figure 1 ;
[Fig. 3] - La figure 3 est une vue schématique de face de la réglette de la figure 2, selon la flèche III de la figure 2 ;
[Fig. 4] - La figure 4 est une vue schématique de dessus de la réglette de la figure 2, selon la flèche IV de la figure 2 ;
[Fig. 5] - La figure 5 est une vue schématique de dessous de la réglette de la figure 2, selon la flèche V de la figure 2 ;
[Fig. 6] - La figure 6 est une vue schématique en perspective de dessus de la réglette des figures 2 à 5 ;
[Fig. 7] - La figure 7 est une vue schématique en perspective de dessous de la réglette de la figure 6 ;
[Fig. 8A] - La figure 8A est une vue schématique en perspective d'une première étape d'assemblage de l'étagère selon un mode de réalisation de l'invention ;
[Fig. 8B] - La figure 8B est une vue schématique en perspective de la première étape d'assemblage élargie au niveau de la flèche VIIIB de la figure 8A ;
[Fig. 9A] - La figure 9A est une vue schématique en perspective d'une deuxième étape d'assemblage de l'étagère selon un mode de réalisation de l'invention ;
[Fig. 9B] - La figure 9B est une vue schématique en perspective de la deuxième étape d'assemblage élargie au niveau de la flèche IXB de la figure 9A ;
[Fig. 10A] - La figure 10A est une vue schématique en perspective d'une troisième étape d'assemblage de l'étagère selon un mode de réalisation de l'invention ;
[Fig. 10B] - La figure 10B est une vue schématique en perspective de la troisième étape d'assemblage élargie au niveau de la flèche XB de la figure 10A ;
[Fig. 11] - La figure 11 est une vue schématique en perspective d'une quatrième étape d'assemblage de l'étagère selon un mode de réalisation de l'invention ;
[Fig. 12] - La figure 12 est une vue schématique en perspective d'une cinquième étape d'assemblage de l'étagère selon un mode de réalisation de l'invention ;
[Fig. 13A] - La figure 13A est une vue schématique en perspective d'une sixième étape d'assemblage de l'étagère selon un mode de réalisation de l'invention ;
[Fig. 13B] - La figure 13B est une vue schématique en perspective de la sixième étape d'assemblage élargie au niveau de la flèche XIIIB de la figure 13A ;
[Fig. 14A] - La figure 14A est une vue schématique en perspective d'une septième étape d'assemblage de l'étagère selon un mode de réalisation de l'invention ;
[Fig. 14B] - La figure 14B est une vue schématique en perspective de la septième étape d'assemblage élargie au niveau de la flèche XIVB de la figure 14A ;
[Fig. 15] - La figure 15 est une vue schématique semblable à la figure 14B représentant une huitième étape d'assemblage de l'étagère selon un mode de réalisation de l'invention ;
[Fig. 16] - La figure 16 est une vue schématique semblable aux figures 14B et 15 représentant une huitième étape d'assemblage de l'étagère selon un mode de réalisation de l'invention ;
[Fig. 17] - La figure 17 est une vue schématique semblable aux figures 14B, 15 et 16 représentant une neuvième étape d'assemblage de l'étagère selon un mode de réalisation de l'invention ;
[Fig. 18] - La figure 18 est une vue schématique semblable aux figures 14B, 15, 16 et 17 représentant une dixième étape d'assemblage de l'étagère selon un mode de réalisation de l'invention ;
[Fig. 19A] - La figure 19A est une vue schématique en perspective d'une onzième étape d'assemblage de l'étagère selon un mode de réalisation de l'invention et est également une vue élargie au niveau de la flèche XIXA de la figure 1 ;
[Fig. 19B] - La figure 19B est une vue schématique en perspective de la septième étape d'assemblage élargie au niveau de la flèche XIXB de la figure 19A ;
[Fig. 20] - La figure 20 représente un organigramme d'un procédé de montage d'une étagère selon un mode de réalisation de l'invention.

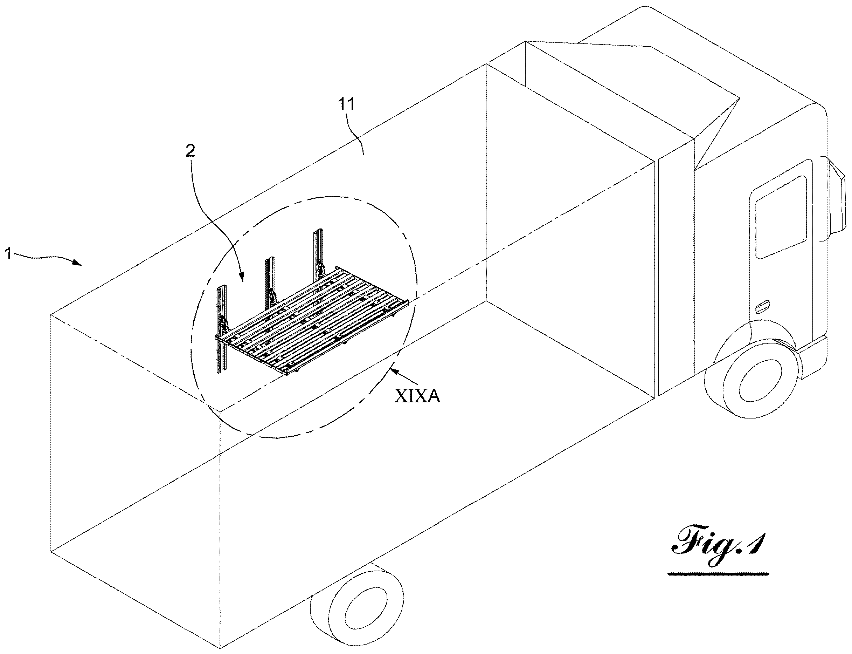

La figure 1 représente un fourgon comprenant un compartiment 1 comprenant une étagère 2 selon un mode de réalisation de l'invention, destinée à supporter des marchandises pour leur transport.

Selon le mode de réalisation représenté, l'étagère 2 est fixée à une cloison 11 verticale du compartiment 1.

Il est entendu que l'étagère 2 peut également être fixée à un camion, à une voiture, à une remorque ou à tout véhicule terrestre de transport de marchandises comprenant une cloison 11 sensiblement verticale.

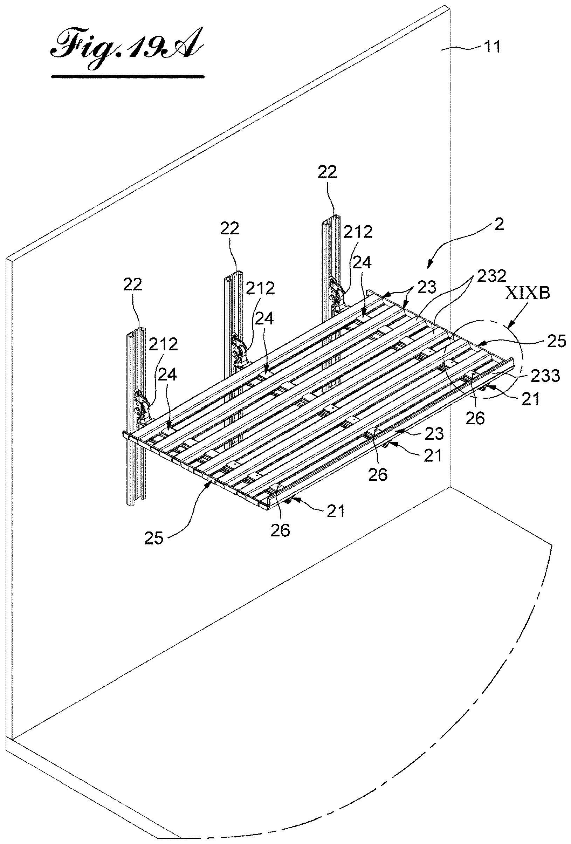

Comme on peut le voir sur la figure 19A, l'étagère 2 comprend au moins deux bras 21 disposés en porte-à-faux et sensiblement perpendiculairement à la cloison 11 verticale sur laquelle l'étagère 2 est fixée.

Selon un mode de réalisation, le bras 21 comprend un moyen 212 de pliage disposé, de préférence, proche de la cloison 11 verticale et configuré pour disposer l'étagère 2 dans une position sensiblement parallèle à la cloison 11 verticale ou dans une position sensiblement perpendiculaire à la cloison 11 verticale. Ainsi, un gain de place dans le compartiment 1 est possible lorsque l'étagère 2 n'est pas utilisée.

Selon le mode de réalisation représenté, l'étagère 2 comprend, pour chaque bras 21, un rail 22 sur lequel est fixé le bras 21. Le rail 22 est fixé à ladite cloison 11 verticale.

Selon le mode de réalisation représenté, les rails 22 permettent un mouvement des bras 21 sensiblement verticalement. Ainsi, la hauteur de l'étagère 2 est modifiable sans avoir, par exemple, besoin de percer de nouveaux trous dans la cloison 11 verticale.

L'étagère 2 comporte également, selon le mode de réalisation représenté, des profilés 23 posés sur un pan 214 des bras 21, sensiblement perpendiculairement aux bras 21 et sensiblement parallèlement à la cloison 11 verticale.

Selon le mode de réalisation représenté, chaque bras 21 comprend une âme 215 sensiblement perpendiculaire au pan 214 des bras 21 s'étendant à l'opposé des profilés 23.

Selon un mode de réalisation, les bras 21 sont fabriqués en matériau métallique. Selon un mode de réalisation, les bras 21 sont fabriqués en alliage d'aluminium.

Selon un mode de réalisation, les bras 21 sont fabriqués par moulage.

Selon le mode de réalisation représenté, les bras 21 présentent une forme s'évasant longitudinalement vers la cloison 11.

Selon le mode de réalisation illustré, l'étagère 2 comprend, pour chaque bras 21, une réglette 24 d'assemblage et de maintien des profilés 23 sur les bras 21.

Selon le mode de réalisation représenté, la réglette 24 présente une forme s'évasant complémentaire à la forme du bras 21.

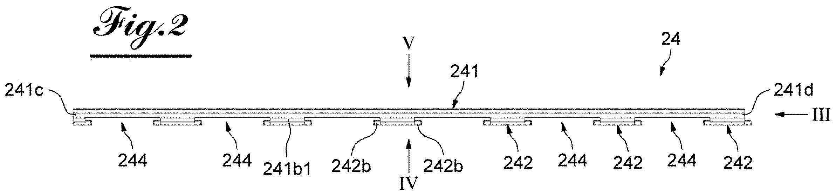

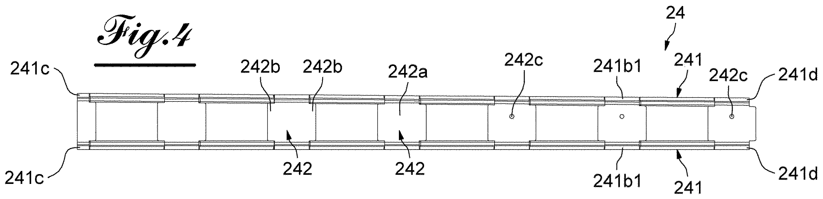

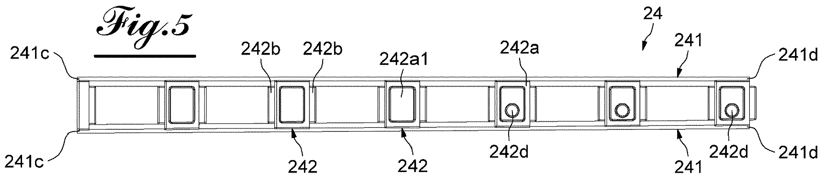

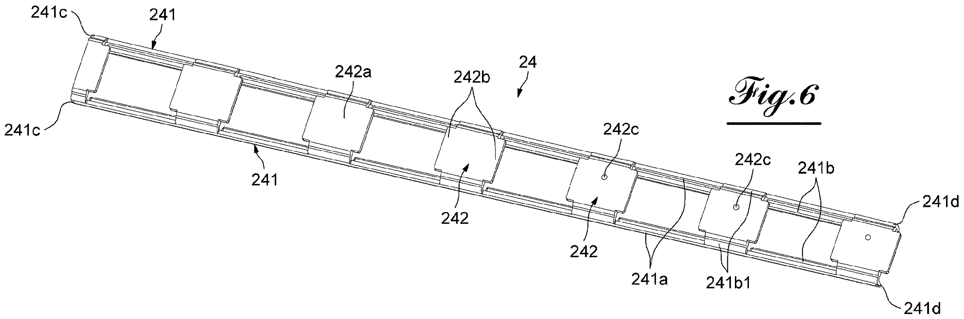

Les figures 2 à 7 représentent plus particulièrement la réglette 24 d'assemblage et de maintien des profilés 23.

Selon le mode de réalisation représenté, la réglette 24 présente une forme allongée.

La réglette 24 comprend une glissière 241 sensiblement parallèle à la dimension d'allongement de la réglette 24.

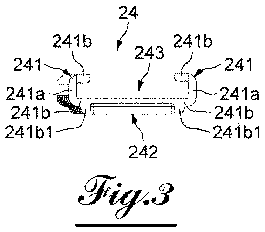

Comme on peut le voir en particulier sur la figure 3, la glissière 241 comprend, de part et d'autre des pièces (242) intercalaires, un flanc 241a intermédiaire et deux décrochés 241b extrêmes.

Le flanc 241a intermédiaire est solidaire en ses deux extrémités d'une extrémité de chaque décroché 241b extrême. Chaque décroché241b extrême comprend ainsi une extrémité non en contact avec le flanc 241a intermédiaire appelée par la suite extrémité 241b1 de bout.

Selon le mode de réalisation illustré, les deux décrochés 241b extrêmes sont sensiblement perpendiculaires au flanc 241a intermédiaire et s'étendent dans la même direction.

Selon le mode de réalisation représenté, la réglette 24 comprend également des pièces 242 intercalaires solidaires de l'extrémité 241b1 de bout d'un des décrochés 241b extrêmes de la glissière 241 de sorte que les extrémités 241b1 de bout des décrochés 241b extrêmes de la glissière 241 se font sensiblement face. La glissière 241 forme ainsi une gorge 243 présentant, en section, sensiblement une forme en T, particulièrement visible sur la figure 3.

Selon le mode de réalisation illustré, les pièces 242 intercalaires sont sensiblement réparties de manière équidistante sur la longueur de la glissière 241.

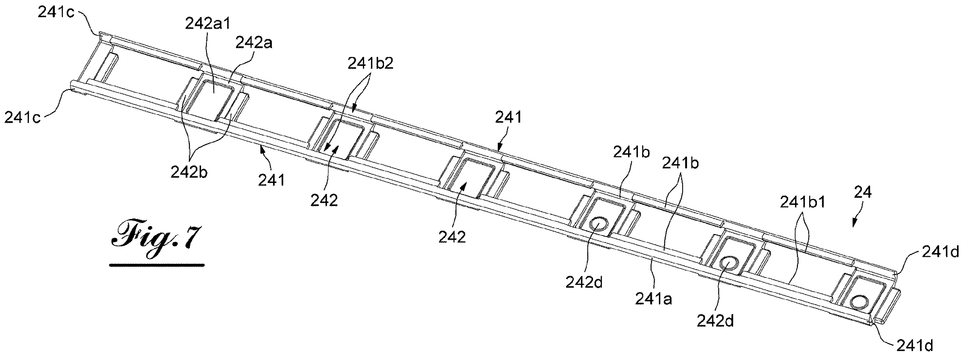

Comme on peut le voir en particulier sur la figure 7, la glissière 241 comprend, au niveau de chaque pièce 242 intercalaire, une découpe 241b2 de ses décrochés 241b extrêmes non en contact avec les pièces 242 intercalaires. Selon le mode de réalisation représenté, ces découpes 241b2 font sensiblement la largeur des pièces 242 intercalaires.

Les pièces 242 intercalaires comprennent un corps 242a principal présentant une forme sensiblement parallélépipédique. Le corps 242a principal solidarise les pièces 242 intercalaires à la glissière 241.

Chaque pièce 242 intercalaire comprend deux ailettes 242b disposées de part et d'autre du corps 242a principal. Les ailettes 242b font saillie du corps 242a principal vers les pièces 242 intercalaires voisines.

Selon le mode de réalisation représenté, la réglette 24 comprend, entre les pièces 242 intercalaires, des échancrures 244 traversant les décrochés 241b extrêmes de la glissière 241 solidaires des pièces 242 intercalaires et traversant en partie les ailettes 242b. Les échancrures 244 sont configurées pour que le côté des ailettes 242b orienté vers la glissière 241 soit plus éloigné de la glissière 241 que le côté du corps 242a principal orienté vers la glissière 241.

Les échancrures 244 définissent ainsi un passage sensiblement en forme de T, particulièrement visible sur la figure 2.

Selon le mode de réalisation illustré, le corps 242a principal de chaque pièce 242 intercalaire comprend un renfoncement 242a1 du côté du corps 242a principal orienté vers la glissière 241.

Selon le mode de réalisation représenté, le renfoncement 242a1 présente une forme sensiblement parallélépipédique. Le renfoncement 242a1 est sensiblement centré par rapport au corps 242a principal.

Selon un mode de réalisation non illustré, au moins une des pièces 242 intercalaires n'est pas en contact avec le bras 21 une fois la glissière 241 glissée sur le bras 21. Ainsi, les frottements entre la réglette 24 et le bras 21 sont réduits lors du glissement de la réglette 24 sur le bras 21.

Selon le mode de réalisation illustré, la réglette 24 comprend, en une première extrémité 241c de la glissière 241, une demi-pièce 242 intercalaire.

Selon le mode de réalisation représenté, les trois pièces 242 intercalaires d'assemblage et de maintien les plus proches d'une deuxième extrémité 241d de la glissière 241, opposée à la première extrémité 241c, comprennent chacune une cavité 242c. Les cavités 242c sont disposées sur le corps 242a principal des pièces 242 intercalaires, du côté opposé à la glissière 241.

Selon des modes de réalisation différents, la cavité 242c est un trou traversant le corps 242a principal des pièces 242 intercalaires.

Selon le mode de réalisation illustré, les pièces 242 intercalaires d'assemblage et de maintien comprenant une cavité 242c comprennent chacune un plot 242d d'appui.

Le plot 242d d'appui fait saillie du renfoncement 242a1 jusqu'au niveau du côté du corps 242a principal orienté vers la glissière 241.

Selon le mode de réalisation illustré, le plot 242d d'appui est sensiblement aligné avec la cavité 242c.

Selon un mode de réalisation non illustré, le plot 241d d'appui fait saillie du côté du corps 242a principal orienté vers le bras 21 mais distant du bras 21.

Selon un mode de réalisation non représenté, la glissière 241 comprend au moins une partie affaiblie. Cette partie affaiblie permet de sectionner facilement la réglette 24 d'assemblage et de maintien afin de réduire sa longueur en fonction de la configuration requise pour l'étagère 2. La réglette 24 est ainsi frangible facilement à des endroits prédéterminés.

Selon un mode de réalisation, la réglette 24 est en matériau plastique ou en résine.

Selon un mode de réalisation, la réglette 24 est fabriquée par moulage.

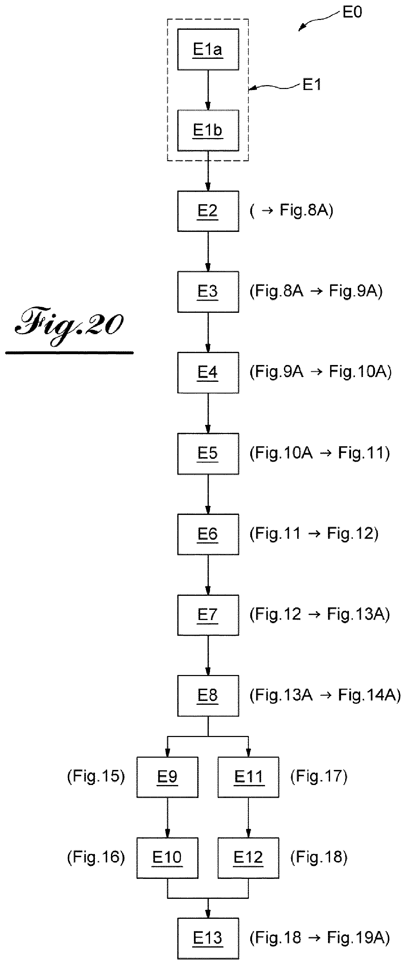

Comme représenté sur la figure 20, un procédé E0 de montage de l'étagère 2 comprend une solidarisation E1 d'au moins deux bras 21 à la cloison 11 verticale du compartiment 1.

Selon un mode de réalisation, la solidarisation E1 des bras 21 comprend une fixation E1a de rails 22 à la cloison 11 verticale et une fixation E1b de chaque bras 21 à un des rails 22.

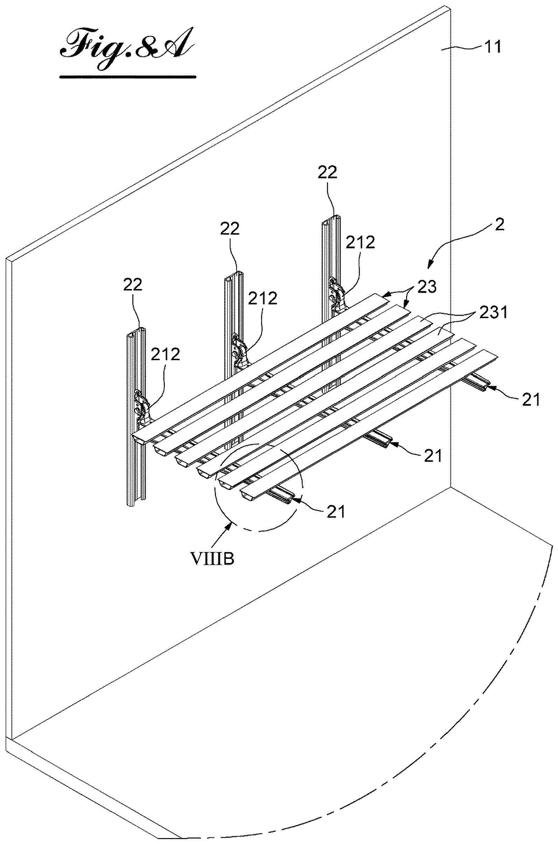

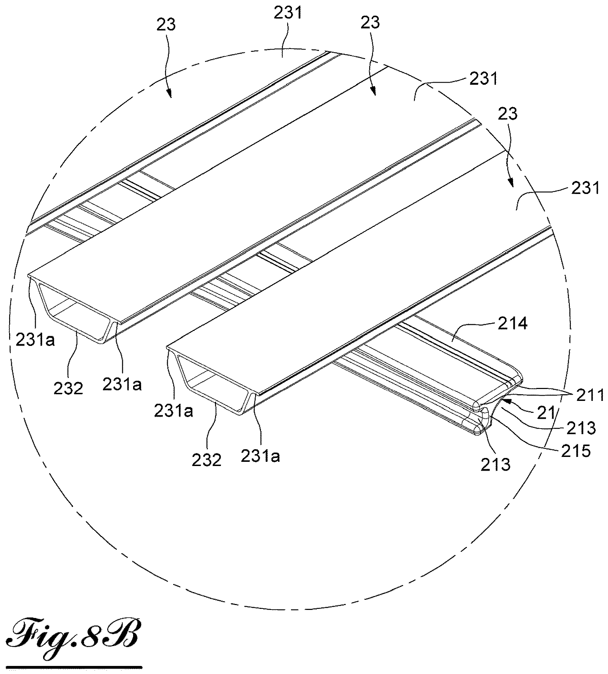

Le procédé E0 de montage de l'étagère 2 comprend, comme représenté aux figures 8A et 8B, une pose E2 à l'envers des profilés 23. Les profilés 23 sont disposés sensiblement parallèlement les unes aux autres et légèrement espacées les unes des autres.

Chaque profilé 23 comprend une face 231 de pose contre les bras 21 orientée vers le haut lors de la pose E2 à l'envers.

Selon le mode de réalisation illustré, les profilés 23 présentent en section une forme de quadrilatère dont la face 231 de pose et sa face 232 opposée sont sensiblement parallèles entre elles. Ainsi, lorsque les profilés 23 sont solidaires des bras 21, les profilés 23 offrent une zone sensiblement plane pour y poser les marchandises à transporter.

Selon le mode de réalisation illustré, la face 231 de pose comprend des ailes 231a latérales qui dépassent du quadrilatère formé par les profilés 23 dans l'alignement de cette face 231 de pose.

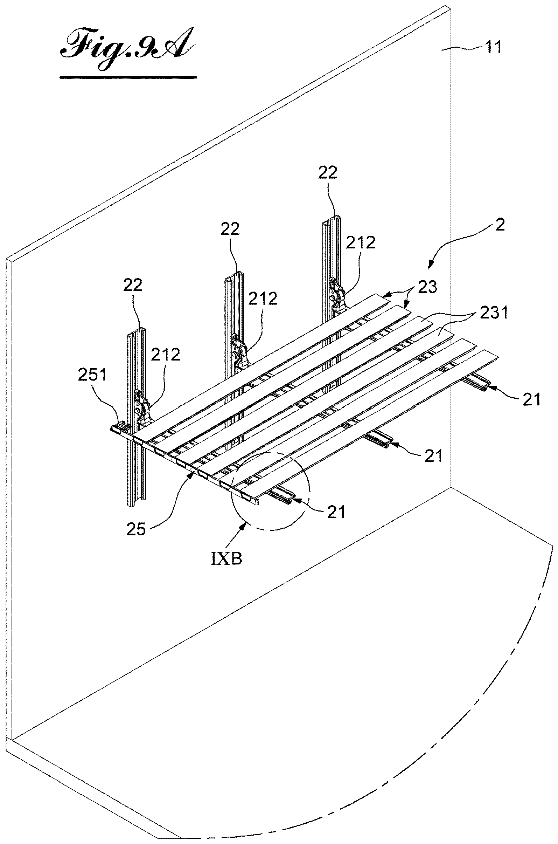

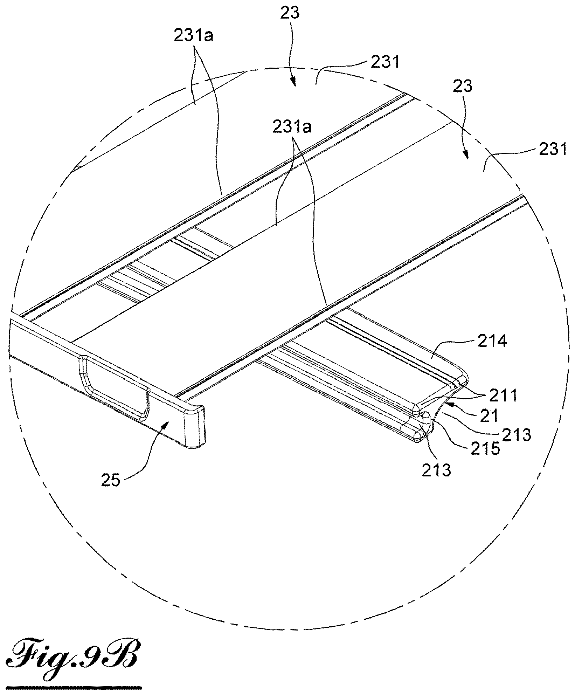

Selon le mode de réalisation représenté sur les figures 9A et 9B, le procédé E0 de montage comprend une fixation E3 d'une bordure 25 latérale de l'étagère 2 aux profilés 23.

Selon le mode de réalisation représenté, la fixation E3 de la bordure 25 latérale est faite par emboîtement de la bordure 25 latérale dans les profilés 23.

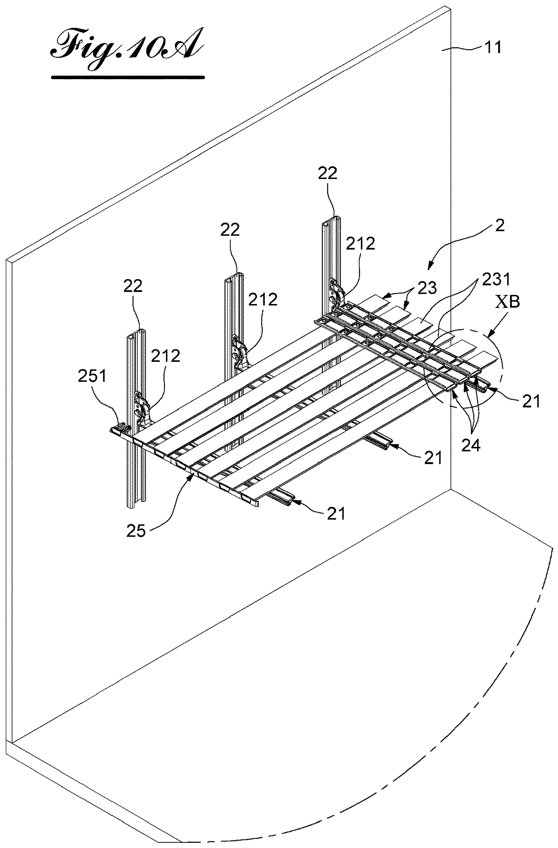

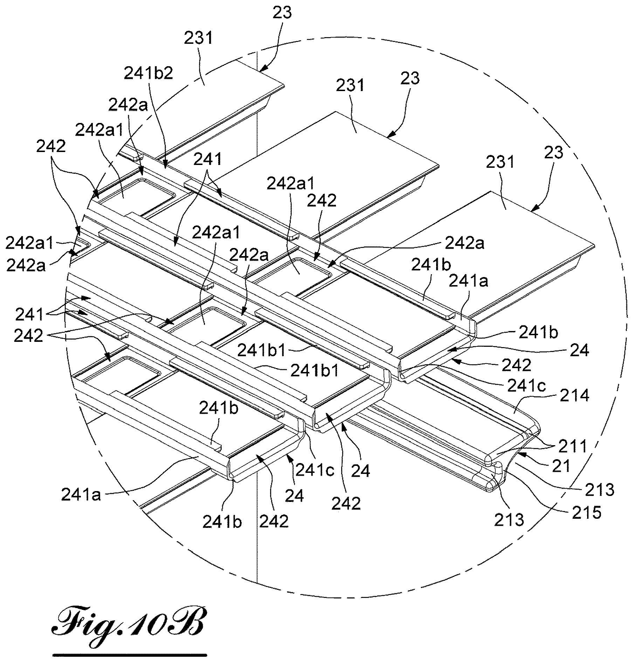

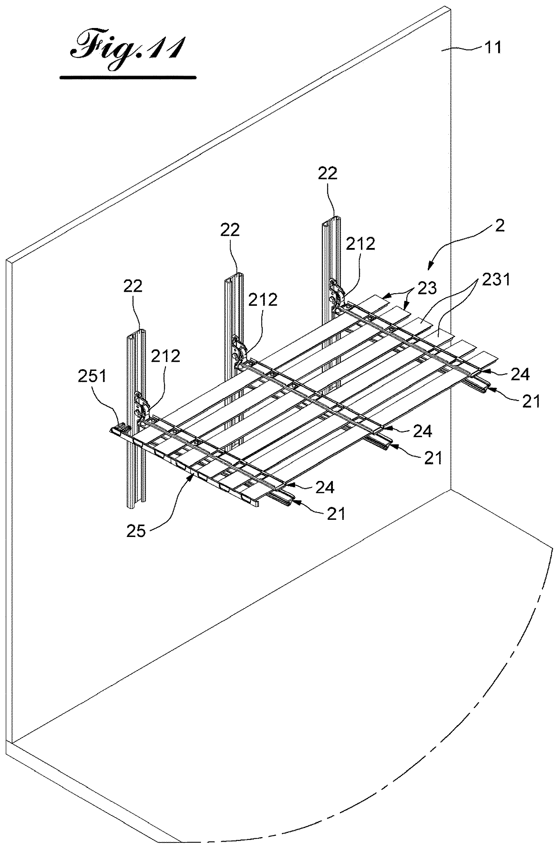

Comme représenté aux figures 10A, 10B et 11, le procédé E0 de montage comprend un engagement E4 puis un glissement E4 de réglettes 24 sur les profilés 23.

Selon le mode de réalisation représenté, l'engagement E4 est réalisé pour toutes les réglettes 24 puis le glissement E5 des réglettes 24 est effectué pour toutes les réglettes 24 engagées.

Selon un mode de réalisation différent, l'engagement E4 et le glissement E5 est réalisé pour chaque réglette 24, une par une.

L'engagement E4 est réalisé en insérant la face 231 de pose des profilés 23 dans les échancrures 244 des réglettes 24. Les ailes 231a de la face 231 de pose des profilés 23 sont configurées pour s'insérer entre les ailettes 242b et la glissière 241 des réglettes 24.

Ainsi, l'écartement entre les profilés 23 est configuré par les pièces 242 intercalaires. Les profilés 23 et les réglettes 24 sont solidarisés entre elles par une liaison glissière sensiblement parallèle à la dimension d'extension des profilés 23.

Le glissement E5 des réglettes 24 sur les profilés 23 permet de disposer approximativement chaque réglette 24 au niveau de chaque bras 21.

Selon le mode de réalisation illustré, la pose E2 à l'envers des profilés 23 est réalisée sur les bras 21 solidarisés à la cloison 11 verticale. Ainsi, le positionnement des réglettes 24 au niveau de chaque bras 21 est facilité lors du glissement E5 des réglettes.

La pose E2 à l'envers facilite également le glissement E5 des réglettes 24 afin de ne pas imposer un soulèvement des profilés 23 lors du glissement E5 des réglettes 24.

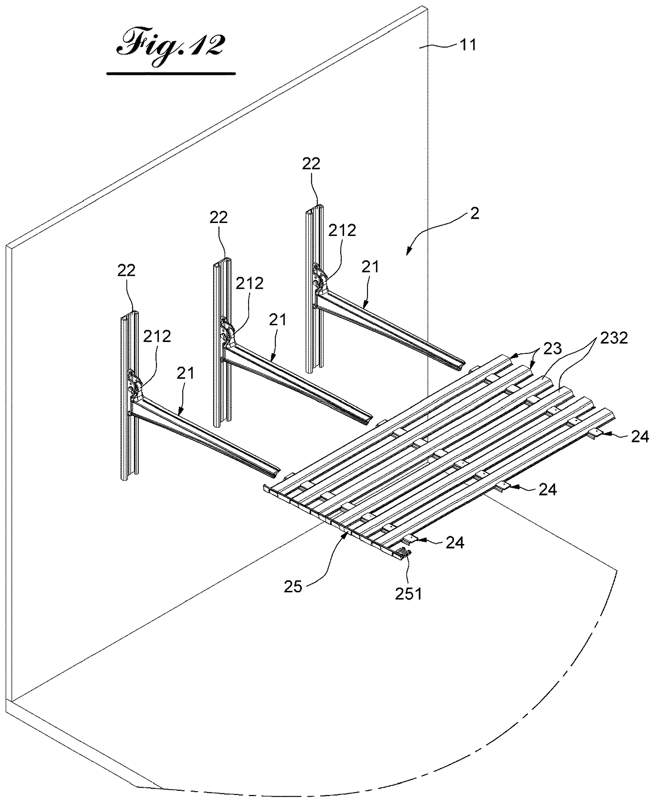

Le procédé E0 de montage comprend, comme représenté à la figure 12, un retournement E6 de l'ensemble formé par les profilés 23 et les réglettes 24.

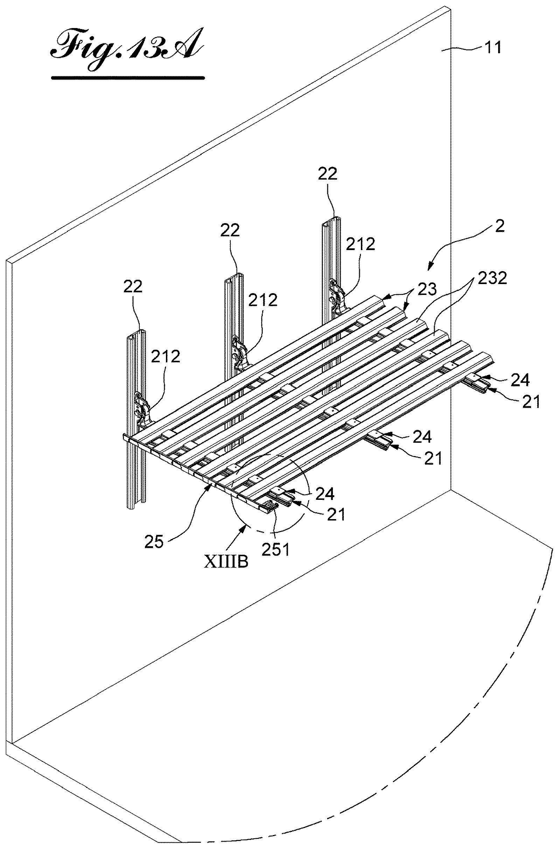

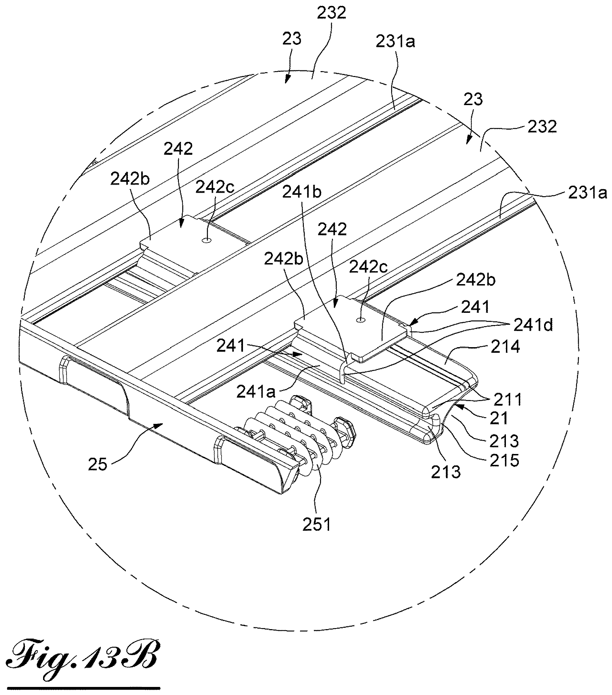

Le procédé E0 de montage de l'étagère 2 comprend, après assemblage des profilés 23 et des réglettes 24, un glissement E7 de cet assemblage sur les bras 21, comme représenté sur les figures 13A et 13B.

Comme représenté sur la figure 13B, chaque bras 21 comprend un guide 211 présentant en section une forme complémentaire à la forme des gorges 243 des réglettes 24. Ainsi, pour le glissement E7 dudit assemblage sur les bras 21, la gorge 243 de chaque réglette 24 est engagée et glissée sur le guide 211 d'un des bras 21. L'extrémité 241b1 de bout des décrochés 241b extrêmes de la glissière 241 opposées aux pièces 242 intercalaires est engagée par des passages 213 dudit bras 21 disposés à une extrémité dudit bras 21 opposée à la cloison 11 verticale.

Selon un mode de réalisation illustré, le renfoncement 242a1 prévu dans les pièces 242 intercalaires limite le contact entre les réglettes 24 et les bras 21. Ainsi, les frottements entre les réglettes 24 et les bras 21 est limité et le glissement E7 de l'assemblage des réglettes 24 et des profilés 23 sur les bras 21 est facilité.

La demi-pièce 242 intercalaire des réglettes 24 est, après glissement E7 de l'assemblage des réglettes 24 et des profilés 23 sur les bras 21, positionnée du côté de la cloison 11 verticale. Le profilé 23 la plus proche de la cloison 11 verticale limite ainsi l'espace entre ce profilé 23 et la cloison 11 verticale limitant le risque de chute de marchandise posée sur l'étagère 2.

Selon le mode de réalisation représenté en particulier sur la figure 13B, la bordure 25 latérale de l'étagère 2 comprend, après glissement E7 dudit assemblage sur les bras 21, un moyen 251 de fixation pour un profilé 23 non utilisé. Ce moyen 251 de fixation non utilisé est disposé au niveau de l'extrémité du bras 21 opposée à la cloison 11 verticale.

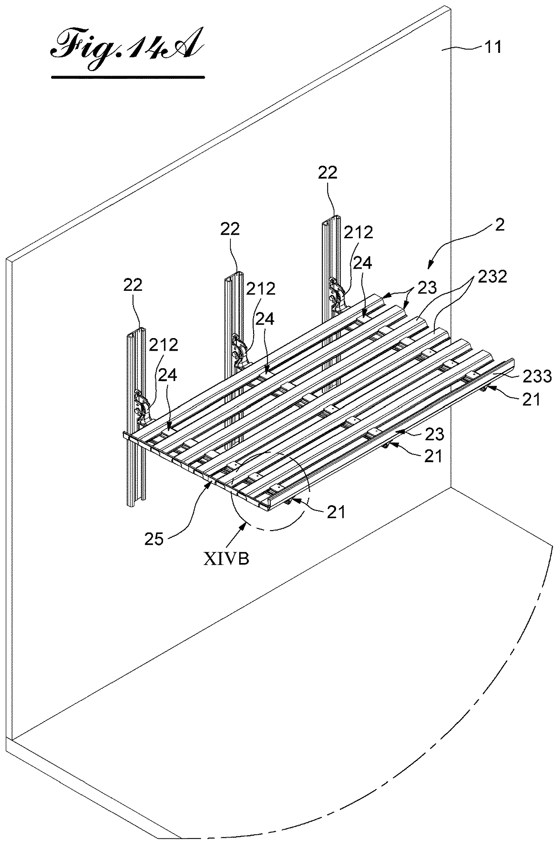

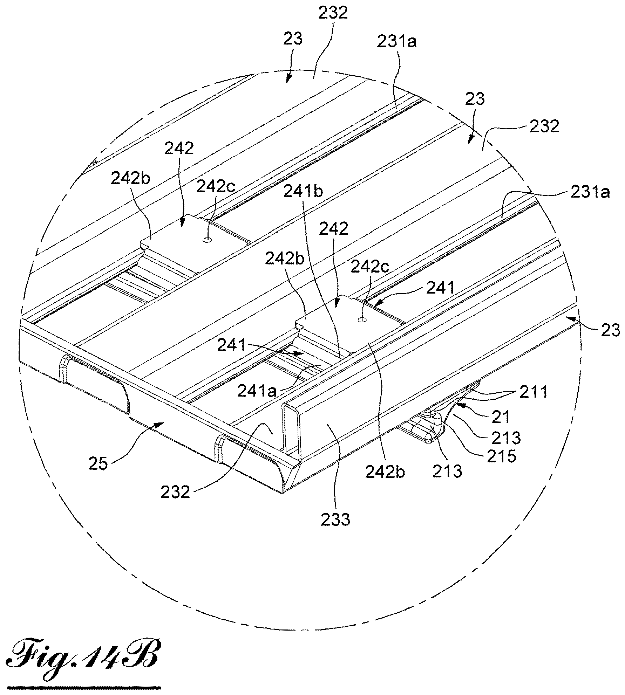

Comme représenté sur les figures 14A et 14B, le procédé E0 de montage de l'étagère 2, après glissement E7 dudit assemblage sur les bras 21, comprend une solidarisation E8 d'un profilé 23 sur le moyen 251 de fixation non utilisé.

Selon le mode de réalisation illustré, la solidarisation E8 du profilé 23 est réalisée par emboîtement du profilé 23 sur le moyen 251 de fixation de la bordure 25 latérale.

Selon le mode de réalisation représenté en particulier sur la figure 14B, ce dernier profilé 23 fixé comprend un bord 233 de protection faisant saillie vers le haut, lorsque l'étagère 2 est en position pour soutenir des marchandises, afin de limiter le risque de mouvement et/ou de chute des marchandises disposées sur l'étagère 2.

Selon un mode de réalisation non illustré, la bordure 25 latérale comprend également un bord de protection faisant saillie vers le haut, lorsque l'étagère 2 est en position pour soutenir des marchandises, afin de limiter le risque de mouvement et/ou de chute des marchandises disposées sur l'étagère 2.

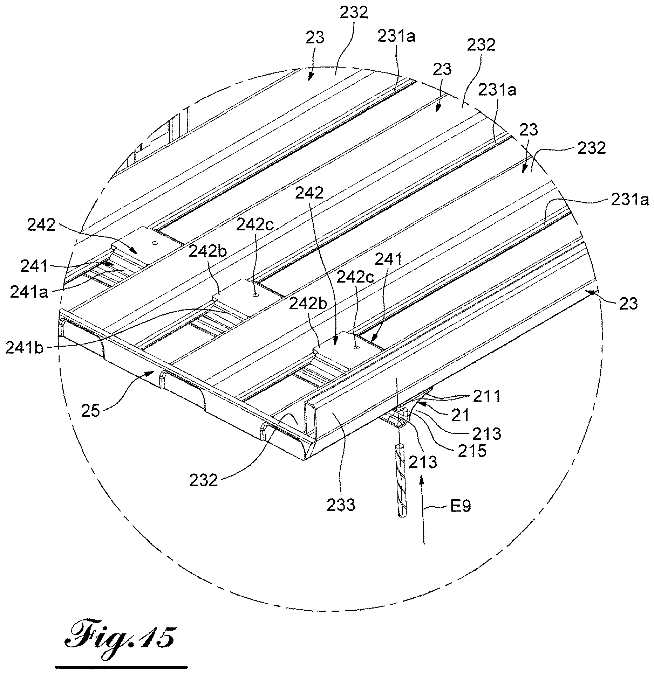

Comme illustré à la figure 15, le procédé E0 de montage comprend un perçage E9 du dernier profilé 23 assemblé et du guide 211. Ce perçage E9 est de préférence réalisé au niveau de chaque bras 21.

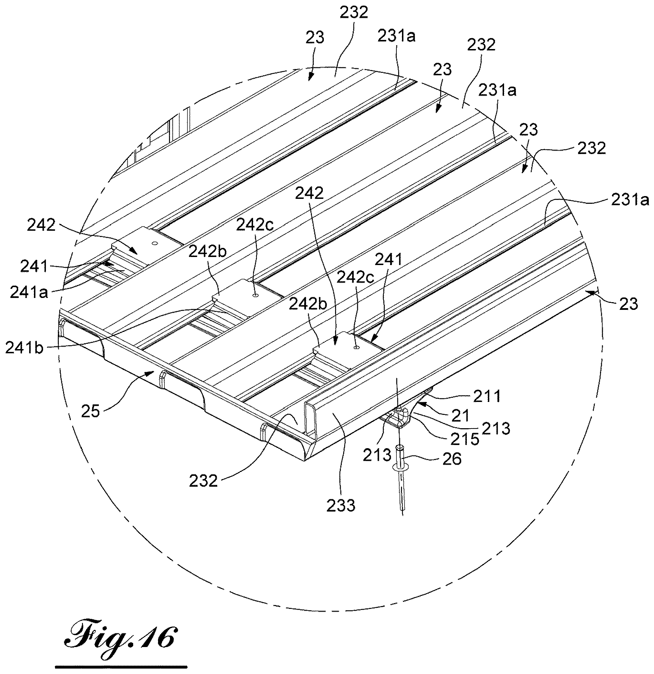

Comme représenté sur la figure 16, le procédé E0 de montage comprend une fixation E10 du dernier profilé 23 assemblé avec le guide 211. Cette fixation E10 est par exemple faite grâce à un rivet 26. Cette fixation E10 est de préférence réalisée au niveau de chaque trou précédemment percé.

Selon le mode de réalisation représenté, l'âme 215 des bras 21 n'est pas centrée par rapport au pan 214 des bras 21 de sorte à laisser suffisamment de place pour le perçage E9 et la fixation E 10.

Ce perçage E9 est de préférence réalisé par le dessous de sorte que le rivet 26 ou tout autre moyen d'immobilisation ne dépasse pas de la face 231 du profilé 23 sur lequel seront posées les marchandises.

Selon des modes de réalisation non représentés, le moyen d'immobilisation de la pièce 242 intercalaire est par exemple une vis, un boulon, de la colle, une soudure ou encore une coopération entre un ergot et un creux.

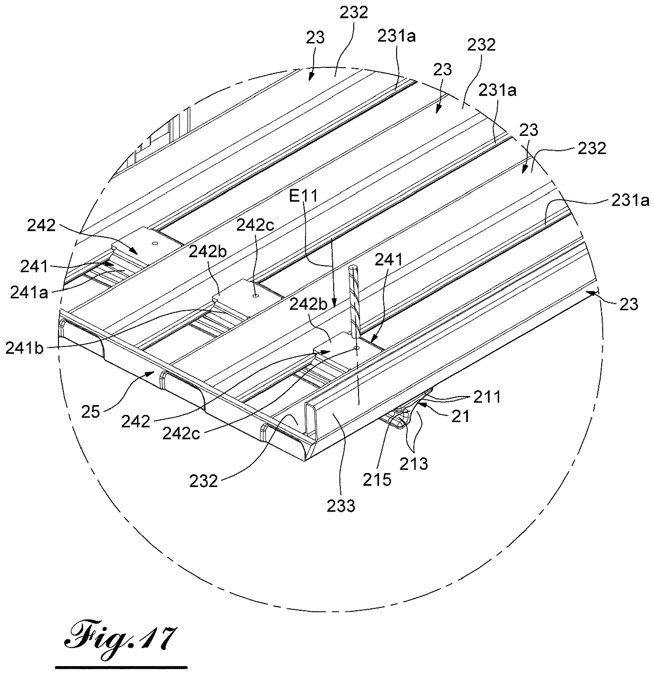

Comme illustré à la figure 17, le procédé E0 de montage comprend un perçage E11 d'une des réglettes 24 et du guide 211. Ce perçage E11 est de préférence réalisé au niveau de chaque bras 21.

Les cavités 242c des pièces 242 intercalaires facilitent le perçage E11 des réglettes 24 et du guide 211 en permettant de centrer plus facilement et rapidement un moyen de perçage.

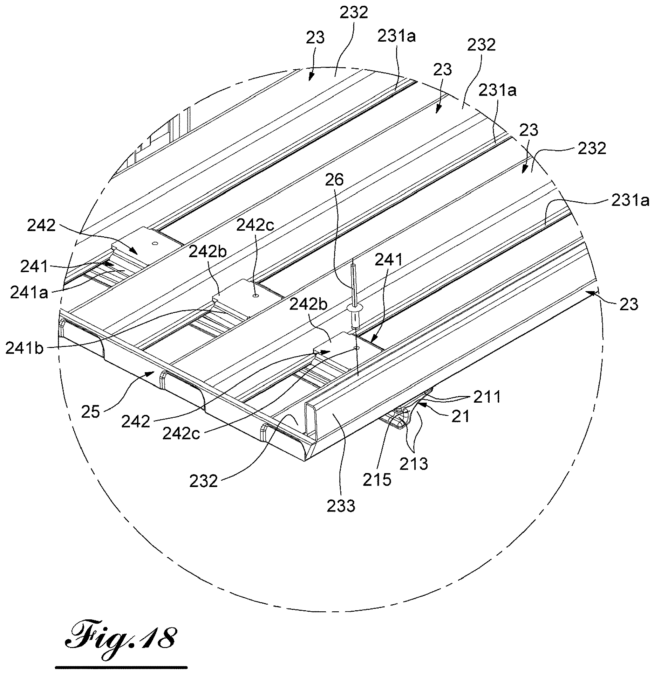

Comme représenté sur la figure 18, le procédé E0 de montage comprend une fixation E12 de la réglette 24 avec le guide 211. Cette fixation E12 est par exemple faite grâce à un rivet 26. Cette fixation E12 est de préférence réalisée au niveau de chaque trou précédemment percé.

La face supérieure de la réglette 24 est, de préférence, plus basse que la face 231 de pose des profilés 23. Ce perçage E11 peut ainsi être réalisé par le dessus de sorte à faciliter la manutention sans pour autant que le rivet 26 ou tout autre moyen d'immobilisation ne dépasse de la face 231 du profilé 23 sur lequel seront posées les marchandises.

Lors de la fixation E12 de la réglette 24 avec le guide 211, le plot 242d d'appui est en contact avec le guide 211. Ainsi, la pièce 242 intercalaire ne se déforme pas sous l'effet du rivet 26 ou de tout autre moyen d'immobilisation.

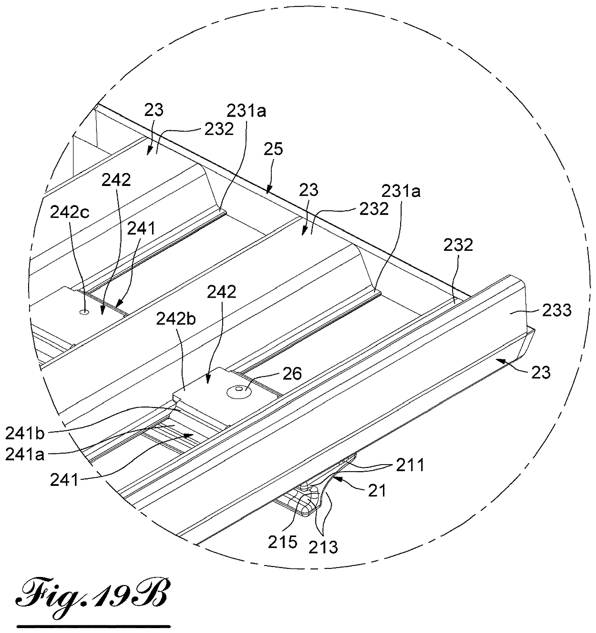

Comme représenté sur les figures 19A et 19B, le procédé E0 de montage comprend une fixation E13 d'une deuxième bordure 25 latérale, opposée à la première bordure 25 latérale.

Selon un mode de réalisation, les profilés 23 sont fabriqués en matériau métallique. Selon un mode de réalisation, les profilés 23 sont fabriqués en alliage d'aluminium.

Selon un mode de réalisation, les profilés 23 sont fabriqués par extrusion.

L'étagère 2 selon l'invention permet ainsi de faciliter le classement et l'accès aux marchandises. L'étagère 2 permet également de bloquer le mouvement des marchandises posées sur l'étagère 2 par rapport au compartiment 1 et donc de réduire le risque de détérioration de ces marchandises.

Les réglettes 24 selon l'invention permettent ainsi de réduire considérablement le temps d'assemblage en permettant de ne pas fixer chaque pièce 242 intercalaire aux bras 21. De plus, l'assemblage d'une telle étagère 2 est facilitée puisque les réglettes 24 maintiennent les pièces 242 intercalaires et les profilés 23 les uns aux autres ce qui permet à l'opérateur de ne manipuler qu'un assemblage solidaire.

Par ailleurs de telles réglettes 24 permettent une personnalisation rapide et facile de l'étagère 2 en fonction des contraintes du client et du compartiment 1 dans lequel elle est fixée.

## Revendications

1. Etagère (2) d'un compartiment (1) de transport de marchandises, l'étagère (2) comprenant au moins deux bras (21), chaque bras (21) comprenant un moyen (22, 212) de fixation du bras (21) sensiblement horizontalement et en porte-à-faux à une cloison (11) du compartiment (1), l'étagère (2) comprenant, soutenus par les bras (21), des profilés (23) formant une surface de support des marchandises, l'étagère (2) comprenant pour chaque bras (21) des pièces (242) intercalaires de maintien des profilés (23) au bras (21), les profilés (23) étant disposés entre les pièces (242) intercalaires et comprenant des ailes (231a) latérales plaquées et maintenues contre le bras (21) par les pièces (242) intercalaires, l'étagère (2) étant **caractérisée en ce que** des pièces (242) intercalaires disposées pour un même bras (21) sont intégrées à une glissière (241) présentant une forme complémentaire à un guide (211) dudit bras (21).

2. Etagère (2) de compartiment (1) selon la revendication précédente, **caractérisée en ce que** la glissière (241) comprend des flancs (241a) s'étendant de chaque côté du bras (21) et comprend deux décrochés (241b) s'étendant l'un vers l'autre à partir des flancs (241a) et **en ce que** le bras (21) comprend un passage (213) d'engagement longitudinal des décrochés (241b) dans des creux du bras (21) disposés sur la partie inférieure du bras (21).

3. Etagère (2) de compartiment (1) selon l'une quelconque des revendications précédentes, **caractérisée en ce qu'**une des pièces (242) intercalaires est rivetée au bras (21).

4. Etagère (2) de compartiment (1) selon l'une quelconque des revendications précédentes, **caractérisée en ce que** la glissière (241) solidaire desdites pièces (242) intercalaires disposées pour un même bras (21) comprend une partie affaiblie de découpe de la glissière (241).

5. Etagère (2) de compartiment (1) selon la revendication précédente, **caractérisée en ce que** la glissière (241) comprend au moins deux parties affaiblies disposées à une extrémité (241d) de la glissière (241) opposée au moyen (22, 212) de fixation des bras (21).

6. Etagère (2) de compartiment (1) selon l'une quelconque des revendications précédentes, **caractérisée en ce qu'**au moins une des pièces (242) intercalaires est distante du guide (211).

7. Etagère (2) de compartiment (1) selon l'une quelconque des revendications précédentes, **caractérisée en ce qu'**au moins une des pièces (242) intercalaires comprend un plot (242d) d'appui au contact du bras (21).

8. Etagère (2) de compartiment (1) selon l'une quelconque des revendications précédentes, **caractérisée en ce qu'**au moins une des pièces (242) intercalaires comprend une cavité (242c) d'alignement pour un perçage, sur son côté opposé au guide (211).

9. Etagère (2) de compartiment (1) selon l'une quelconque des revendications précédentes, **caractérisée en ce que** les bras (21) sont en matériau métallique et/ou les pièces (242) intercalaires sont en résine ou en matériau plastique.

10. Etagère (2) de compartiment (1) selon l'une quelconque des revendications précédentes, **caractérisée en ce qu'**elle comprend, au niveau d'une extrémité (241d) de la glissière (241) disposée à l'opposé du moyen (22, 212) de fixation des bras (21), un profilé (23) comprenant un bord (233) orienté vers le haut pour la protection contre les chutes de marchandises disposées sur l'étagère (2), ce profilé (23) étant riveté directement sur au moins deux des bras (21).

11. Procédé (E0) de montage d'une étagère (2) de compartiment (1) de transport de marchandises, le procédé (E0) comprenant une solidarisation (E1) d'au moins deux bras (21) à une cloison (11) du compartiment (1), les bras (21) s'étendant sensiblement horizontalement et en porte-à-faux à la cloison (11), le procédé (E0) comprenant un positionnement de profilés (23) de l'étagère (2) soutenus par les bras (21), un positionnement de pièces (242) intercalaires de l'étagère (2) entre les profilés (23), le procédé (E0) comprenant également un plaquage d'ailes (231a) latérales des profilés (23) contre le bras (21) par les pièces (242) intercalaires, le procédé (E0) de montage étant **caractérisé en ce que**, des pièces (242) intercalaires disposées pour un même bras (21) étant intégrées à une glissière (241) présentant une forme complémentaire à un guide (211) dudit bras (21), le procédé (E0) comprend un glissement (E7) de la glissière (241) sur le guide (211).

## Patentansprüche

1. Regal (2) eines Fachs (1) zum Transport von Waren, das Regal (2) umfassend mindestens zwei Arme (21), jeder Arm (21) umfassend eine Einrichtung (22, 212) zur Befestigung des Arms (21) im Wesentlichen horizontal und freitragend an einer Trennwand (11) des Fach(1), das Regal (2) umfassend von den Armen (21) getragene Profile (23), die eine Fläche zum Tragen der Waren bilden, das Regal (2) umfassend für jeden Arm (21) Zwischenstücke (242) zum Halten der Profile (23) an dem Arm (21), wobei die Profile (23) zwischen den Zwischenstücken (242) angeordnet sind und seitliche Flügel (23la) umfassen, die durch die Zwischenstücke (242) gegen den Arm (21) gepresst und gehalten werden, wobei das Regal (2) **dadurch gekennzeichnet ist, dass** die Zwischenstücke (242), die für einen Arm (21) angeordnet sind, in eine Gleitschiene (241) integriert sind, die eine Form aufweist, die komplementär zu einer Führung (211) des Arms (21) ist.

2. Regal (2) eines Fachs (1) nach dem vorherigen Anspruch, **dadurch gekennzeichnet, dass** die Gleitschiene (241) Flanken (241a) umfasst, die sich auf jeder Seite des Arms (21) erstrecken und zwei Abstufungen (241b) umfassen, die sich von den Flanken (241a) zueinander erstrecken, und dass der Arm (21) einen Durchgang (213) für einen Längseingriff der Abstufungen (241b) in Vertiefungen des Arms (21) umfasst, die an dem unteren Abschnitt des Arms (21) angeordnet sind.

3. Regal (2) eines Fachs (1) nach einem der vorherigen Ansprüche, **dadurch gekennzeichnet, dass** eines der Zwischenstücke (242) an den Arm (21) genietet ist.

4. Regal (2) eines Fachs (1) nach einem der vorherigen Ansprüche, **dadurch gekennzeichnet, dass** die einstückige Gleitschiene (241) der Zwischenstücke (242), die für einen Arm (21) angeordnet sind, einen geschwächten Schnittabschnitt der Gleitschiene (241) umfasst.

5. Regal (2) eines Fachs (1) nach dem vorherigen Anspruch, **dadurch gekennzeichnet, dass** die Gleitschiene (241) mindestens zwei geschwächte Abschnitte umfasst, die an einem Ende (241d) der Gleitschiene (241) gegenüber der Einrichtung (22, 212) zur Befestigung der Arme (21) angeordnet sind.

6. Regal (2) eines Fachs (1) nach einem der vorherigen Ansprüche, **dadurch gekennzeichnet, dass** mindestens eines der Zwischenstücke (242) von der Führung (211) beabstandet ist.

7. Regal (2) eines Fachs (1) nach einem der vorherigen Ansprüche, **dadurch gekennzeichnet, dass** mindestens eines der Zwischenstücke (242) einen Stützklotz (242d) in Anlagekontakt mit dem Arm (21) umfasst.

8. Regal (2) eines Fachs (1) nach einem der vorherigen Ansprüche, **dadurch gekennzeichnet, dass** mindestens eines der Zwischenstücke (242) auf seiner Seite gegenüber der Führung (211) eine Ausrichtungsaussparung (242c) für eine Bohrung umfasst.

9. Regal (2) eines Fachs (1) nach einem der vorherigen Ansprüche, **dadurch gekennzeichnet, dass** die Arme (21) aus einem metallischen Material sind und/oder die Zwischenstücke (242) aus Harz oder Kunststoffmaterial sind.

10. Regal (2) eines Fachs (1) nach einem der vorherigen Ansprüche, **dadurch gekennzeichnet, dass** es auf Höhe eines Endes (241d) der Gleitschiene (241), das gegenüber der Einrichtung (22, 212) zur Befestigung der Arme (21) angeordnet ist, ein Profil (23) umfasst, umfassend einen Rand (233), der nach oben gerichtet ist, zum Schutz gegen das Herunterfallen von Waren, die auf dem Regal (2) angeordnet sind, wobei dieses Profil (23) direkt auf mindestens zwei der Arme (21) genietet ist.

11. Verfahren (E0) zur Montage eines Regals (2) eines Fachs (1) zum Transport von Waren, das Verfahren (E0) umfassend eine feste Verbindung (E1) von mindestens zwei Armen (21) mit einer Trennwand (11) des Fachs (1), wobei sich die Arme (21) im Wesentlichen horizontal und freitragend an der Trennwand (11) erstrecken, das Verfahren (E0) umfassend eine Positionierung von Profilen (23) des Regals (2), die von den Armen (21) getragen werden, eine Positionierung von Zwischenstücken (242) des Regals (2) zwischen den Profilen (23), das Verfahren (E0) auch umfassend ein Pressen von seitlichen Flügeln (231a) der Profile (23) gegen den Arm (21) durch die Zwischenstücke (242), wobei das Verfahren (E0) zur Montage **dadurch gekennzeichnet ist, dass**, wenn Zwischenstücke (242), die für einen Arm (21) angeordnet sind, in eine Gleitschiene (241) integriert sind, die eine Form aufweist, die komplementär zu einer Führung (211) des Arms (21) ist, das Verfahren (E0) ein Gleiten (E7) der Gleitschiene (241) auf der Führung (211) umfasst.

## Claims

1. A shelf (2) of a compartment (1) for transporting goods, the shelf (2) comprising at least two arms (21), each arm (21) comprising means (22, 212) for attaching the arm (21) substantially horizontally and cantilevered to a partition (11) of the compartment (1), the shelf (2) comprising, supported by the arms (21), sections (23) forming a surface for supporting the goods, the shelf (2) comprising for each arm (21) inserts (242) for holding the sections (23) to the arm (21), the sections (23) being arranged between the inserts (242) and comprising lateral wings (231a) pressed and held against the arm (21) by the inserts (242), the shelf (2) being **characterized in that** inserts (242) arranged for the same arm (21) are integrated into a slide (241) having a shape complementary to a guide (211) of said arm (21).

2. The compartment (1) shelf (2) according to the preceding claim, **characterized in that** the slide (241) comprises flanks (241a) extending on each side of the arm (21) and comprises two hooks (241b) extending toward one another from the flanks (241a) and **in that** the arm (21) comprises a passage (213) for the longitudinal engagement of the hooks (241b) in recesses of the arm (21) arranged on the lower part of the arm (21).

3. The compartment (1) shelf (2) according to any one of the preceding claims, **characterized in that** one of the inserts (242) is riveted to the arm (21).

4. The compartment (1) shelf (2) according to any one of the preceding claims, **characterized in that** the slide (241) secured to said inserts (242) arranged for the same arm (21) comprises a weakened part for the cutout of the slide (241).

5. The compartment (1) shelf (2) according to the preceding claim, **characterized in that** the slide (241) comprises at least two weakened parts arranged at one end (241d) of the slide (241) opposite the means (22, 212) for attaching the arms (21) .

6. The compartment (1) shelf (2) according to any one of the preceding claims, **characterized in that** at least one of the inserts (242) is remote from the guide (211).

7. The compartment (1) shelf (2) according to any one of the preceding claims, **characterized in that** at least one of the inserts (242) comprises a stud (242d) in contact with the arm (21).

8. The compartment (1) shelf (2) according to any one of the preceding claims, **characterized in that** at least one of the inserts (242) comprises an alignment cavity (242c) for a hole, on its side opposite the guide (211).

9. The compartment (1) shelf (2) according to any one of the preceding claims, **characterized in that** the arms (21) are made of metallic material and/or the inserts (242) are made of resin or plastic material.

10. The compartment (1) shelf (2) according to any one of the preceding claims, **characterized in that** it comprises, at one end (241d) of the slide (241) arranged opposite the means (22, 212) for attaching the arms (21), a section (23) comprising an edge (233) facing upwards for protection against falling goods arranged on the shelf (2), this section (23) being riveted directly on at least two of the arms (21) .

11. A method (E0) for mounting a shelf (2) of a compartment (1) for transporting goods, the method (E0) comprising securing (E1) at least two arms (21) to a partition (11) of the compartment (1), the arms (21) extending substantially horizontally and cantilevered from the partition (11), the method (E0) comprising positioning sections (23) of the shelf (2) supported by the arms (21), positioning inserts (242) of the shelf (2) between the sections (23), the method (E0) also comprising pressing lateral wings (231a) of the sections (23) against the arm (21) by the inserts (242), the mounting method (E0) being **characterized in that,** inserts (242) arranged for the same arm (21) being integrated into a slide (241) having a shape complementary to a guide (211) of said arm (21), the method (E0) comprises a sliding (E7) of the slide (241) on the guide (211).
